# EUROPÄISCHE PATENTANMELDUNG

(11) **EP 1 405 878 A1**
(43) Veröffentlichungstag der Anmeldung: **07.04.2004**
(21) Anmeldenummer: 03018227.3
(22) Anmeldetag: 11.08.2003
(51) Int. Cl.: C08L 61/06, C08L 61/20, C08L 61/28, C09D 161/00, C09J 161/00

(54) **Polykondensationsharze mit aminfunktionalisierten Polymeren**

(30) Priorität: 02.10.2002 DE 10245960
(71) Anmelder: Creavis Gesellschaft für Technologie und Innovation mbH, 45772 Marl (DE)
(72) Erfinder: Ottersbach, Peter, Dr., 51570 Windeck (DE); Inhester, Martina, 45699 Herten (DE)

(57) **Zusammenfassung**

Die Erfindung betrifft Gemische aus Aldehyden, Aminen und/oder Phenolen mit amingruppenhaltigen Polymeren.

Verwendung der Gemische als Leim, Kleber, Beschichtungslack oder Einbrennlack.

## Beschreibung

Polykondensationsharze aus Aldehyden mit Phenolen und/oder Aminen wie z. B. Melamin-Harze, Melamin- Phenol- Formaldehyd-Harze oder Phenol-Harze werden häufig im Innenausbau für Holzspanplatten oder in der Möbelindustrie eingesetzt. Diese Harze setzen in geringen Konzentrationen flüchtige Aldehyde wie Formaldehyd frei.

Formaldehyd ist eine breit eingesetzte Chemikalie und einer der häufigsten Schadstoffe in Innenräumen. In der Vergangenheit sind viele Menschen durch ausgasendes Formaldehyd gesundheitlich beeinträchtigt worden. Auch heutzutage ist die Emission von Formaldehyd aus z. B. Spanplatten und Möbeln mit großen gesundheitlichen Risiken verbunden.

Formaldehyd ist eine organische Verbindung, die sich durch eine hohe Reaktivität auszeichnet. Bei der Anreicherung in der Luft ist es ein stechend riechendes Gas.

Verantwortlich für erhöhte Konzentrationen im Wohnbereich sind allerdings fast immer Spanplatten in Wänden, Fußböden und Möbeln, wo Formaldehyd in verschiedenen Verbindungen im Leimharz enthalten ist. Gebundenes Formaldehyd kann durch Reaktion mit Wasser aus der Luftfeuchtigkeit über Jahrzehnte freigesetzt und in gleichbleibender Größenordnung aus Spanplatten abgegeben werden, und birgt so über einen sehr langen Zeitraum ein großes gesundheitliches Risiko.

Formaldehyd hat einen stechenden Geruch und wirkt stark reizend auf die Augen sowie die Schleimhäute von Nase und Rachen. Bei erhöhten Konzentrationen in der Raumluft kommt es zunehmend zu Tränenfluß, Husten und Atemnot. Es können unterschiedliche Beschwerden von Unkonzentriertheit bis hin zu starken Kopfschmerzen und Übelkeit mit Brechreiz auftreten. Viele Betroffene klagen über Unbehagen. Die Reizeffekte verschwinden, sobald die Formaldehydexposition aufhört.

In Bezug aus eine krebserregende Wirkung ist Formaldehyd in der Gefahrstoffverordnung "mit begründetem Verdacht auf krebserzeugendes Potential" ausgewiesen.

Erhöhte Formaldehydkonzentrationen in der Raumluft sind durch einen beißenden Geruch des Reizgases zu erkennen. Zur Ermittlung von stark erhöhten Konzentrationen sind einfach zu handhabende Meßverfahren (z.B. Prüfröhrchen, Bio Check) erhältlich, die dem Fachmann das Auffinden von Emissionsquellen ermöglichen. Zur genaueren Analyse verwendet man photometrische Verfahren. Diese Methoden ermöglichen genaue quantitative Analysen, die den Vergleich von gemessenen Konzentrationen mit Richt- und Grenzwerten zuläßt.

Im Bereich von Arbeitsplätzen, z.B. in einer Tischlerei, gilt die maximale Arbeitsplatzkonzentration (MAK-Wert) von 0,5 ppm. In Wohnräumen kann man diesen Richtwert jedoch nicht ansetzen. Hierin halten sich über 24 Stunden sensible Personen wie Kranke oder Kleinkinder auf. Das Bundesgesundheitsamt hat schon 1977 einen Maximalwert für die Formaldehydkonzentration in Innenräumen von 0,1 ppm vorgeschlagen, der auch unter ungünstigen Bedingungen nicht überschritten werden soll. Empfindliche Personen können jedoch schon bei weitaus geringeren Konzentrationen auf Formaldehyd reagieren. Deshalb ist ein "Vorsorgewert" von höchstens 0,05 ppm angemessen.

Zur Minimierung der Formaldehydemission verwendet man in der spanholzverarbeitenden Industrie sogenannte Formaldehydfänger, wie z. B. Harnstoff. Diese niedermolekularen Verbindungen sind aber für eine permanente Immobilisierung nicht geeignet und migrieren aus der Matrix weg, so dass die Funktion als Formaldehydfänger zeitlich limitiert ist. Da Formaldehydemissionen aber über viele Jahre auftreten können, ist auf diesem Wege eine effektiver Schutz nur bedingt möglich.

Als Alternative hierzu werden Substanzen gesucht, die über einen langen Zeitraum hinweg immobilisiert in der Nähe der Formaldehydemittenten verbleiben, sich möglichst wenig bis gar nicht toxisch gegenüber höheren Organismen verhalten, nicht in die Raumluft abgegeben werden und die anwendungstechnischen Eigenschaften des zu imprägnierenden Materials nahezu unbeeinflußt lassen.

Es wurde überraschenderweise gefunden, dass Formaldehydemissionen von formaldehydhaltigen Harzen, Klebern oder sonstigen Beschichtungen durch Einsatz amingruppenfunktionalisierter Kunststoffe minimiert werden können.

Gegenstand der vorliegenden Erfindung ist ein Gemisch aus Aldehyden, Aminen und/oder Phenolen mit 0.001-5 Gew.-% amingruppenfunktionalisierten Polymeren.

Als Gemisch werden die physikalischen Gemische der genannten Komponenten vor oder während einer Kondensationsreaktion zwischen diesen Komponenten verstanden. Dies betrifft auch den Einsatz der Kondensationsprodukte selbst, z. B. in Form von Präpolymeren von Aldehyd/Amin/Phenol, Aldehyd/Phenol oder Amin/Phenol mit z. B. 10-20000, bevorzugt 10-10000, besonders bevorzugt 10-500 Monomereinheiten. Es ist auch möglich, zunächst zwei Komponenten mit einander umzusetzen, z. B. ein Phenol-Formaldehydharz herzustellen und dieses entweder mit weiterem Formaldehyd und/oder Aminen weiter zu verarbeiten. Dies ist eine übliche Verfahrensweise in der Harzindustrie; es werden kommerziell Harzgemische zur weiteren Verarbeitung angeboten (z. B. die Luwipal-Reihe der BASF.

Die erfindungsgemäßen Gemische können daher verarbeitungsfertig in Form der Lösungen, Suspensionen oder Dispersionen in Methanol, Ethanol, Butanol, Ethylacetat, Butylacetat, Toluol, Xylol, Ethylenglycol, Butylglycol, Testbenzin oder Wasser vorliegen. Bevorzugt enthalten diese Systeme 30 bis 95 Gew.-% des erfindungsgemäßen Gemischs und 70 bis 5 Gew.-% des Lösungs- oder Dispergiermittels.

Die Kondensationsprodukte aus Aldehyden mit Phenolen und/oder Aminen können wie üblich hergestellt werden, wobei die Gemische als Aldehydkomponente Formaldehyd, Acetaldehyd und/oder Benzaldehyd, als Phenolkomponente Phenol, Resorcin, Kresole, Xylole, Bisphenol A und als Aminkomponente Melamin, Methylmelamin, Hexamethoxymethylmelamin, Melaminether, Urethan oder Harnstoff enthalten können.

Weiterer Gegenstand der vorliegenden Erfindung ist ein Verfahren zur Herstellung von Polykondensationsprodukte aus Aldehyden mit Aminen und/oder Phenolen, wobei den Polykondensationsprodukten, vor, während oder nach deren Herstellung von 0.001 - 5 Gew.-% aminfunktionalisierte Polymere zugesetzt werden.
Als amingruppenfunktionalisierte Polymere sind prinzipiell alle Polymere oder Copolymere geeignet, die aus stickstofffunktionalisierten Monomeren hergestellt wurden, insbesondere solche, die einen hohen Funktionalisierungsgrad aufweisen. Insbesondere die aus einem anderen Gebiet bekannten antimikrobiellen Polymere auf Aminbasis, wie z. B. in den Patentanmeldungen DE 100 24 270, DE 100 22 406, WO 01/18077, DE 100 14 726, DE 100 08 177, WO 01/16193, WO 01/19878, WO 01/14435, WO 00/69926, WO 00/69938, WO 00/69937, WO 00/69933, WO 00/69934, WO 00/69925, WO 00/69935, WO 00/69936, WO 00/69264, WO 00/44818, WO 00/44812 beschrieben, sind in diesem Zusammenhang hervorragend geeignet.

Diese Polymere enthalten keine niedermolekularen Bestandteile; die Amingruppen sitzen am Polymer und sind daher über das Polymerbackbone immobilisiert.

Insbesondere werden diese Polymere aus mindestens einem der folgenden Monomere hergestellt:
Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, Methacrylsäure-2-diethylaminoethylester, 2-Acrylamido-2-methyl-1-propansulfonsäure, 2-Diethylaminoethylvinylether, 3-Aminopropylvinylether, 3-Aminopropylmethacrylat, 2-Aminoethylmethacrylat, 4-Aminobutylmethacrylat, 5-Aminopentylmethacrylat, 3-Aminopropylacrylat, 2-Aminopropylacrylat, 4-Aminobutylacrylat, 5-Aminopentylacrylat, 2-Aminoethylvinylether, 4-Aminobutylvinylether und/oder 5-Aminopentylvinylether.

Optional können bei der Herstellung der amingruppenfunktionalisierten Polymere weitere aliphatisch ungesättigte Monomere Verwendung finden. Hierbei handelt es sich insbesondere um Acrylate oder Methacrylate, z. B. Acrylsäure, tert.-Butylmethacrylat oder Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, insbesondere z.B. Methacrylsäuremethylester, Methacrylsäureethylester, Methacrylsäurebutylester, Methacrylsäure-tert.-butylester, Acrylsäuremethylester, Acrylsäureethylester, Acrylsäurebutylester und/oder Acrylsäure-tert. -butylester. Es ist aber zu beachten, dass sich durch die Hinzunahme amingruppenfreier Comonomere die effektive Anzahl an für die Reaktion mit Aldehyden zur Verfügung stehenden Amingruppen reduziert, was im Einzelfall aber durch gegebenenfalls verbesserte Verarbeitungseigenschaften dieser entsprechenden Copolymere kompensiert wird.

Die amingruppenfunktionalisierten Polymere können den Gemischen in Form von Harzen direkt z. B. in Form von Dispersionen, Lösungen oder als Feststoff, beigemischt werden. Im Einzelfall ist auch eine nachträgliche Aufbringung solcher Polymere auf aldehydemissionsgefährdete Oberflächen denkbar.

Der Anteil der aminhaltigen Polymere in den Gemischen hängt von der zu beeinflussenden Emissionrate an Aldehyden ab, bewegt sich aber im Regelfall in Konzentrationen von 0,001 bis 5 Gew.-%, insbesondere 0,01 bis 1 Gew.-%, bezogen auf die eingesetzte Formulierung.

Es wird vermutet, dass die emittierten Aldehyde mit den Amingruppen der aminhaltigen Polymere reagieren und damit immobilisiert werden. Die Aufnahmekapazität ist theoretisch nur durch die Zahl der reaktionsfähigen Amingruppen im Polymer begrenzt.
Daneben spielen vermutlich auch rein physisch bedingte Kopplungsmechanismen, wie z.B die Physisorption, eine Rolle.

Durch die beschriebenen Vorgehensweisen erhält man aldehydemissionsarm ausgerüstete Formulierungen, die sowohl die erforderlichen mechanischen und Verarbeitungseigenschaften für die gestellten Aufgaben als auch die Emissionsarmut in nahezu idealer Weise miteinander verbinden. Da die Polymere im Allgemeinen schwer flüchtig und durch das Herstellverfahren bedingt zumindest partiell in der Matrix der Dispersion/ des Lackes fixiert sind, werden demzufolge keine bedenklichen niedermolekularen Bestandteile in die Umwelt und damit Raumluft freigesetzt. Solche Systeme können somit auch in sensiblen Bereichen, wie z.B. der Auskleidung von Allergiker- und Schlafräumen, Verwendung finden, ohne dass mit einem toxikologisch bedenklichen Übertritt von Formaldehyd oder anderen Aldehyden aus dem Produkt zu rechnen ist.

Insbesondere kann das erfindungsgemäße Gemisch bzw. Harz oder Polykondensat Einbrennlack, säurehärtender Lack, Laminierkleber, Beschichtungsmittel für Holz, Papier oder Kunststoff, Leim oder Kleber oder Binder für Spanplatten verwendet werden.

Zur weiteren Beschreibung der vorliegenden Erfindung werden die folgenden Beispiele gegeben, welche die Erfindung weiter erläutern, nicht aber ihren Umfang begrenzen sollen, wie er in den Patentansprüchen dargelegt ist.

### Beispiel 1:

8 mL tert.-Butylaminoethylmethacrylat (Fa. Aldrich), 22 g einer 70%igen wässrigen Lösung von Triton X 405 (Fa. Aldrich), 100 mL VE-Wasser und 0,3 g Kaliumperoxodisulfat (Fa. Aldrich) werden in einem Dreihalskolben vorgelegt und unter Argonzustrom auf 60°C erhitzt. Danach werden über einen Zeitraum von 4 Stunden weitere 90 mL tert.-Butylaminoethylmethacrylat zugetropft. Anschließend rührt man die Mischung noch weitere 2 Stunden bei 60°C, danach läßt man die entstandene Emulsion auf Raumtemperatur abkühlen.

### Beispiel 1a:

0,5 g des Produktes aus Beispiel 1 werden zu 50g LUWIPAL® 068 (BASF) gegeben, einem formaldehydhaltigen Lackrohstoff. 0,2 g dieser Mischung werden auf ein Aluminiumblech der Abmessung 3 mal 3 cm dünn aufgetragen und bei 90°C 60 Minuten getrocknet.

### Beispiel 1b:

0,2 g LUWIPAL® 068 (BASF) werden auf ein Aluminiumblech der Abmessung 3 mal 3 cm dünn aufgetragen und bei 90°C 60 Minuten getrocknet.

### Beispiel 1c:

Mittels Headspace-GC wird die Formaldehydemission der Proben aus Beispiel 1a und 1b halbquantitaiv bestimmt. Während bei Probe 1a kein freies Formaldehyd detektiert werden kann, emittiert die Probe 1b im Vergleich dazu Mengen von mehr als 5 ppm Formaldehyd..

### Beispiel 2:

50 mL tert.-Butylaminoethylmethacrylat (Fa. Aldrich) und 250 mL Etylaceteat werden in einem Dreihalskolben vorgelegt und unter Argonzustrom auf 65°C erhitzt. Danach werden 0,5 g Azobisisobutyronitril gelöst in 20 mL Ethylacetat unter Rühren langsam zugetropft. Das Gemisch wird auf 70°C erhitzt und 6 Stunden bei dieser Temperatur gerührt. Nach Ablauf dieser Zeit wird der Reaktionsmischung das Lösemittel durch Destillation entzogen. Im Anschluß wird das Produkt für 24 Stunden bei 50°C im Vakuum getrocknet. Das Produkt wird anschließend in 200 ml Aceton gelöst, danach wird der Reaktionsmischung das Lösemittel durch Destillation entzogen und für 24 Stunden bei 50°C im Vakuum getrocknet.

### Beispiel 2a:

0,5 g des Produktes aus Beispiel 2 werden zu 50g LUWIPAL® 068 (BASF) gegeben, einem formaldehydhaltigen Lackrohstoff. 0,2 g dieser Mischung werden auf ein Aluminiumblech der Abmessung 3 mal 3 cm dünn aufgetragen und bei 90°C 60 Minuten getrocknet.

### Beispiel 2b:

0,2 g LUWIPAL® 068 (BASF) werden auf ein Aluminiumblech der Abmessung 3 mal 3 cm dünn aufgetragen und bei 90°C 60 Minuten getrocknet.

### Beispiel 2c:

Mittels Headspace-GC wird die Formaldehydemission der Proben aus Beispiel 2a und 2b halbquantitaiv bestimmt. Während bei Probe 2a kein freies Formaldehyd detektiert werden kann, emittiert die Probe 2b im Vergleich dazu Mengen von mehr als 5 ppm Formaldehyd.

### Beispiel 3:

50 mL Dimethylaminopropylmethacrylamid (Fa. Aldrich) und 250 mL Ethanol werden in einem Dreihalskolben vorgelegt und unter Argonzustrom auf 65°C erhitzt. Danach werden 0,5 g Azobisisobutyronitril gelöst in 20 mL Ethanol unter Rühren langsam zugetropft. Das Gemisch wird auf 70°C erhitzt und 6 Stunden bei dieser Temperatur gerührt. Nach Ablauf dieser Zeit wird der Reaktionsmischung das Lösemittel durch Destillation entzogen und für 24 Stunden bei 50°C im Vakuum getrocknet. Das Produkt wird anschließend in 200 ml Aceton gelöst, danach wird der Reaktionsmischung das Lösemittel durch Destillation entzogen und für 24 Stunden bei 50 °C im Vakuum getrocknet. Das Reaktionsprodukt wird im Anschluß fein zermörsert.

### Beispiel 3a:

0,5 g des Produktes aus Beispiel 3 werden zu 50g LUWIPAL® 068 (BASF) gegeben, einem formaldehydhaltigen Lackrohstoff. 0,2 g dieser Mischung werden auf ein Aluminiumblech der Abmessung 3 mal 3 cm dünn aufgetragen und bei 90°C 60 Minuten getrocknet.

### Beispiel 3b:

0,2 g LUWIPAL® 068 (BASF) werden auf ein Aluminiumblech der Abmessung 3 mal 3 cm dünn aufgetragen und bei 90°C 60 Minuten getrocknet.

### Beispiel 3c:

Mittels Headspace-GC wird die Formaldehydemission der Proben aus Beispiel 3a und 3b halbquantitaiv bestimmt. Während bei Probe 3a kein freies Formaldehyd detektiert werden kann, emittiert die Probe 3b im Vergleich dazu Mengen von mehr als 6 ppm Formaldehyd.

### Beispiel 4:

8 mL tert.-Butylaminoethylmethacrylat (Fa. Aldrich), 22 g einer 70%igen wässrigen Lösung von Triton X 405 (Fa. Aldrich), 100 mL VE-Wasser und 0,3 g Kaliumperoxodisulfat (Fa. Aldrich) werden in einem Dreihalskolben vorgelegt und unter Argonzustrom auf 60 °C erhitzt. Danach werden über einen Zeitraum von 4 Stunden weitere 90 mL tert.-Butylaminoethylmethacrylat zugetropft. Anschließend rührt man die Mischung noch weitere 2 Stunden bei 60°C, danach läßt man die entstandene Emulsion auf Raumtemperatur abkühlen.

### Beispiel 4a:

0,5 g des Produktes aus Beispiel 4 werden zu 50g LUWIPAL® 066 (BASF) gegeben, einem formaldehydhaltigen Lackrohstoff. 0,2 g dieser Mischung werden auf ein Aluminiumblech der Abmessung 3 mal 3 cm dünn aufgetragen und bei 90°C 60 Minuten getrocknet.

### Beispiel 4b:

0,2 g LUWIPAL® 066 (BASF) werden auf ein Aluminiumblech der Abmessung 3 mal 3 cm dünn aufgetragen und bei 90°C 60 Minuten getrocknet.

### Beispiel 4c:

Mittels Headspace-GC wird die Formaldehydemission der Proben aus Beispiel 4a und 4b halbquantitaiv bestimmt. Während bei Probe 4a kein freies Formaldehyd detektiert werden kann, emittiert die Probe 4b im Vergleich dazu Mengen von mehr als 6 ppm Formaldehyd.

## Patentansprüche

1. Gemisch aus Aldehyden, Aminen und/oder Phenolen mit 0.001-5 Gew.-% amingruppenfunktionalisierten Polymeren.

2. Gemisch nach Anspruch 1,
**dadurch gekennzeichnet,**
**dass** die amingruppenfunktionalisierten Polymere aus stickstofffunktionalisierten Monomeren hergestellt werden.

3. Gemisch nach den Ansprüchen 1 oder 2,
**dadurch gekennzeichnet,**
**dass** die amingruppenfunktionalisierten Polymere aus mindestens einem der Monomere aus der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, Methacrylsäure-2-diethylaminoethylester, 2-Acrylamido-2-methyl-1-propansulfonsäure, 2-Diethylaminoethylvinylether, 3-Aminopropylvinylether, 3-Aminopropylmethacrylat, 2-Aminoethylmethacrylat, 4-Aminobutylmethacrylat, 5-Aminopentylmethacrylat, 3-Aminopropylacrylat, 2-Aminopropylacrylat, 4-Aminobutylacrylat, 5-Aminopentylacrylat, 2-Aminoethylvinylether, 4-Aminobutylvinylether und/oder 5-Aminopentylvinylether hergestellt werden.

4. Gemisch nach einem der Ansprüche 1 bis 3,
**dadurch gekennzeichnet,**
**dass** die amingruppenfunktionalisierten Polymere noch mindestens ein weiteres aliphatisch ungesättigtes Monomer aus der Gruppe Acrylate oder Methacrylate, Acrylsäure, tert.-Butylmethacrylat oder Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, Methacrylsäuremethylester, Methacrylsäureethylester, Methacrylsäurebutylester, Methacrylsäuretert.-butylester, Acrylsäuremethylester, Acrylsäureethylester, Acrylsäurebutylester und/oder Acrylsäure-tert.-butylester, enthalten.

5. Gemisch nach einem der Ansprüche 1 bis 4,
**dadurch gekennzeichnet,**
**dass** das Gemisch als Aldehyd Formaldehyd und/oder Acetaldehyd enthält.

6. Gemisch nach einem der Ansprüche 1 bis 5,
**dadurch gekennzeichnet,**
**dass** das Gemisch als Amin Melamin, Methylmelamin, Hexamethoxymethylmelamin oder Melaminether enthält.

7. Gemisch nach einem der Ansprüche 1 bis 6,
**dadurch gekennzeichnet,**
**dass** das Gemisch als Phenole Phenol, Resorcin, Kresole, Xylole und/oder Bisphenol A enthält.

8. Gemisch nach einem der Ansprüche 1 bis 7,
**dadurch gekennzeichnet,**
**dass** die Aldehyde Amine und/oder Phenole in Form ihrer Kondensationsprodukte eingesetzt werden.

9. Gemisch nach einem der Ansprüche 1 bis 8,
**dadurch gekennzeichnet,**
**dass** die Gemische als Lösung, Suspension oder Dispersion in Methanol, Ethanol, Butanol, Ethylacetat, Butylacetat, Toluol, Xylol, Ethylenglycol, Butylglycol, Testbenzin oder Wasser vorliegen.

10. Verwendung der Gemische gemäß einem der Ansprüche 1 bis 9 als Einbrennlack, säurehärtender Lack, Laminierkleber, Beschichtungsmittel für Holz, Papier oder Kunststoff, Leim oder Kleber oder Binder für Spanplatten.
